# EUROPEAN PATENT APPLICATION

(11) **EP 3 381 538 A1**
(43) Date of publication of application: **03.10.2018**
(21) Application number: 17163644.2
(22) Date of filing: 29.03.2017
(51) Int. Cl.: B01D 53/04, B01J 20/34, B01D 53/86, C01B 21/04, C01B 3/58

(54) **DIP-CONDUIT PURIFICATION APPARATUS AND METHOD OF PURIFYING A GAS**

(71) Applicant: Linde Aktiengesellschaft, 80331 München (DE)
(72) Inventor: Matz, Christoph, 85716 Unterschleißheim (DE); Wilhelm, Gerald, 85778 Haimhausen (DE)
(74) Representative: Richmond, Sarah

(57) **Abstract**

A dip-conduit purification apparatus (102) comprises a purification line comprising a plurality of serially coupled purification conduits (124, 126, 128), each of the plurality of purification conduits (124, 126, 128) having an inlet at a first distal end thereof in fluid communication with an outlet at a second distal end thereof.

## Description

The present invention relates to a dip-conduit purification apparatus of the type that, for example, provides purification of a gas by passage of the gas therethrough. The present invention also relates to a method of purifying a gas, the method being of the type that passes a gas through a dip-conduit purification apparatus disposed in a pressure vessel.

In the field of industrial gas production, depending upon application requirements, it is known to provide gases, for example inert gases, containing a managed level of different gaseous impurities. These gases are stored in pressure vessels, for example cylinders, for the purposes of storage, transportation and/or use at customer premises. Typically, gases are purified at a gas production facility and then stored in the cylinders. However, this approach sometimes requires the gases to be transported over great distances, impacting upon the economics of providing gases of a certain level of purity, for example a so-called 6.0 grade of purity.

In this regard, available local gas production facilities may be capable of producing the gas to a lower standard of purity than required, for example 5.0 grade of purity, which if subjected to further purification will attain a higher grade of purity than the 5.0 grade, for example the 6.0 grade.

One known technique for purifying insufficiently pure gas in a cylinder is through use of a so-called dip-tube. The dip-tube is a conduit formed as a single piece and comprising two different types of purification material therein. The two different types of purification materials are arranged as alternating adjacent regions of the different purification materials. A check valve of a dual port valve employed protects both the dip-tube and the cylinder interior from any gas present at an outlet of the dual port valve at a pressure higher than cylinder pressure. The check valve also prevents filling of the cylinder through the dip-tube. The check valve also serves as a residual pressure valve, which provides a second level of protection. The residual valve closes when the cylinder pressure drops to about 450kPa (about 50 psig or 3.4 barg), maintaining a positive pressure in the cylinder at all times. Thus, the cylinder cannot be drained and the interior accidentally exposed to atmospheric oxygen and water in the event that the check valve fails. The check valve and residual pressure valve form a complementary and redundant system to protect the purifier and cylinder. An additional gas flow path is also provided to another outlet of the dual-port valve, which is accessed by a secondary or bypass valve. This flow path connects the interior of the cylinder with the valve outlet, bypassing the flow path to the dip-tube, thereby allowing the cylinder to be filled around the dip-tube and not through the dip-tube.

US patent publication no. 2003/0192430 discloses a single-piece helical purifier tube assembly coupled at one end thereof to a valve connected to a neck of a cylindrical vessel. One or more materials are disposed within the helical purifier tube assembly. US patent no. 6,572,688 relates to a gas purification unit that is disposed within a cylinder used to contain liquefied gas. The gas purification unit comprises a hollow body that is at least partially filled one or more absorbent or adsorbent gas purifying material, for example a molecular sieve and/or a catalyst. However, such arrangements are typically activated by heat and the whole of the conduit containing the purifying materials is subjected to the same heat and other chemical conditions, irrespective of the nature of the purifying material. Consequently, preparation and/or servicing of the conduits is suboptimal and sometimes precludes the use of certain purifying materials owing to the inability of one of the materials to endure, or incompatibility with, one or more of the conditions used in respect of the other purifying material.

For example, the specific materials used in the conduit determine which impurities can be removed, such as oxygen in nitrogen is removed by use of a nickel catalyst and another impurity, for example carbon dioxide, is removed by another material, such as a molecular sieve material. Whilst all purifier materials can require thermal activation prior use, due to the use of a single conduit all purifier materials are activated at the same temperature and using the same forming gas. For example, the molecular sieve and the nickel catalyst are activated with a hydrogen/inert gas mixture at approximately 200 to 300°C. This therefore prevents the use of other purifier materials that are temperature sensitive such as activated carbon.

US patent no. 8,562,718 describes a built-in purifier for a cylinder of essentially nitrogen-free gas having a low water content. An adsorption unit comprising a molecular sieve is provided to adsorb water from the gas. However, such a purifier serves only to remove one kind of impurity and this is insufficient for some applications where the gas needs to be free of more than one impurity.

According to a first aspect of the present invention, there is provided a dip-conduit purification apparatus comprising: a purification line comprising a plurality of serially coupled purification conduits, each of the plurality of purification conduits having an inlet at a first distal end thereof in fluid communication with an outlet at a second distal end thereof.

The purification line may comprise an inlet port and an outlet port; the outlet port may be operably coupled to a valve arrangement. The plurality of serially coupled purification conduits may be coupled end-to-end.

A number of the plurality of purification conduits may extend longitudinally.

The plurality of purification conduits may each comprise a respective purification material stored therein.

The plurality of purification conduits may comprise at least two serially coupled purification conduits. The at least two purification conduits may respectively comprise different purification materials stored therein.

At least three of the plurality of purification conduits may respectively comprise different purification materials.

A purification conduit of the plurality of purification conduits may comprise a molecular sieve material.

A purification conduit of the plurality of purification conduits may comprise a catalyst material.

The catalyst material may be a nickel catalyst material.

A purification conduit of the plurality of purification conduits may comprise activated carbon.

A first purification conduit of the plurality of purification conduits may comprise a molecular sieve material; a second purification conduit of the plurality of purification conduits may comprise a catalyst material; a third purification conduit of the plurality of purification conduits may comprise activated carbon; and the second purification conduit may be disposed between the first and third purification conduits.

Ends of neighbouring purification conduits of the plurality of purification conduits may be coupled together by a respective connector. The respective connector may be detachable.

One of the plurality of purification conduits and another of the plurality of purification conduits may be independently activated. The independently activated purification conduits may be thermally activated.

The plurality of serially coupled purification conduits may be sequential arranged according to a predetermined sequence.

According to a second aspect of the present invention, there is provided a modular dip-conduit purification apparatus comprising the dip-conduit purification apparatus as set forth above in relation to the first aspect of the invention, wherein the each of the plurality of purification conduits constitutes a purification module.

According to a third aspect of the present invention, there is provided a filled pressure vessel for storing a gas therein, the pressure vessel comprising: a body portion having an interior and an exterior, the body portion defining a neck portion at one end thereof; a valve arrangement sealingly coupled to the neck portion; a dip-conduit purification apparatus as set forth above in relation to the first aspect of the invention; wherein a first end of the purification line of the dip-conduit purification apparatus is operably coupled to the valve arrangement and extends within the interior of the body portion away from the valve arrangement.

According to a fourth aspect of the present invention, there is provided a filled pressure vessel filled with a supply gas, the filled pressure vessel comprising the pressure vessel as set forth above in relation to the third aspect of the invention, wherein the body portion of the pressure vessel predominantly contains the supply gas; the body portion may also contain impurity gases.

The supply gas may be hydrogen gas or an inert gas.

According to a fifth aspect of the present invention, there is provided a method of purifying a gas comprising impurities drawn from a pressure vessel having a valve arrangement sealingly coupled thereto, the method comprising: drawing the gas comprising impurities from within the pressure vessel through a plurality of serially coupled purification conduits, at least some of different types of the impurities being respectively removed by each of the plurality of purifications conduits as the gas passes therethrough ; and drawing the gas through the valve arrangement after drawing the gas through the plurality of serially coupled purification conduits.

The gas may be hydrogen gas or an inert gas. The impurities may be gaseous impurities.

It is thus possible to provide a dip-conduit purification apparatus and a method of purifying a gas that is capable of converting, for example a gas of a first purity to a second, higher, purity. The ability to purify gases as they are drawn from a pressure vessel results in a simplification of a supply chain, and reduces costs, associated with the provision of higher purity gases. It is possible to activate and regenerate the respective purifier materials of the apparatus at different temperatures and using different gas mixtures, thereby enabling the use of a greater variety of purification materials. Indeed, certain purification materials, for example activated carbon, hitherto unused owing to limitations of exposing purification materials to a common set of conditions, can now be employed. In this regard, the apparatus and method permit the removal of hydro carbons from, for example, inert gases. It is also possible to expose individual purification materials to temperatures tailored to the specific purification materials, thereby improving efficiency of thermal activation of the purification materials. Similarly, forming gases exposed to the purification materials can be tailored to the individual purification materials so as to improve activation and regeneration of the purification materials.

At least one embodiment of the invention will now be described, by way of example only, with reference to the accompanying drawings, in which:
**Figure 1** is a schematic diagram of a pressure vessel comprising a dip-conduit purification apparatus constituting an embodiment of the invention; and
**Figure 2** is a flow diagram of a method of purifying a gas constituting another embodiment of the invention.

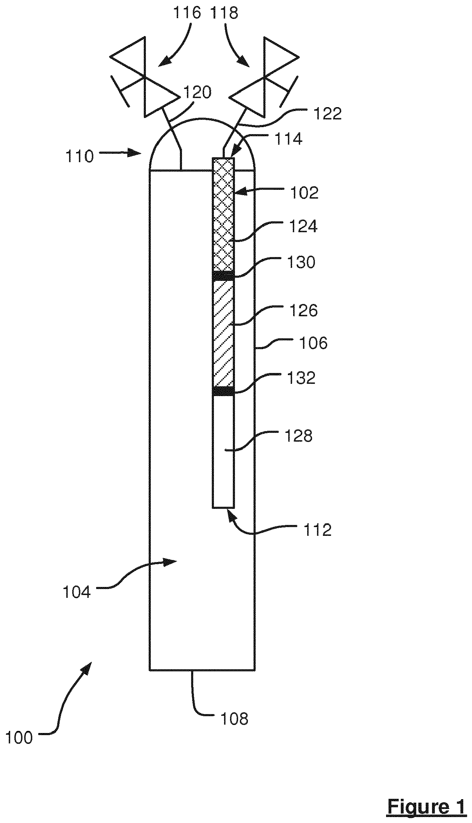

Referring to Figure 1, a pressure vessel 100, for example a cylinder, comprises a dip-conduit purification apparatus 102. The pressure vessel 100 has an interior 104, an exterior, a side wall 106, a base 108 disposed at one end of the side wall 106 and a neck 110 at the other end of the side wall 106. The side wall 106 and the base 108 define a body portion and the side wall 106 also defines the neck. The dip-conduit purification apparatus 100 comprises an inlet port 112 and an outlet port 114. The neck 110 is arranged to sealingly accommodate a valve arrangement comprising, in this example, an inlet valve 116 and an outlet valve 118. However, the skilled person should appreciate that other valve arrangements can be employed depending upon application requirements, including safety and redundancy.

The inlet valve 116 is operably coupled to an inlet conduit 120 that extends through the valve arrangement so as to be in fluid communication with the interior 104 of the pressure vessel 100. The outlet port 114 of the dip-conduit purification apparatus 102 is operably coupled to the outlet valve 118 via an outlet conduit 122 that also extends through the valve arrangement. The dip-conduit purification apparatus 102 extends away from the valve arrangement into the interior 104 of the pressure vessel 100.

The dip-conduit purification apparatus 102 is a modular apparatus that comprises a plurality of serially coupled purification conduits constituting a purification line. In this example, the dip-conduit purification apparatus 102 comprises at least three purification conduits. However, two or more purification modules can be employed in other examples. In the present example, the dip-conduit purification apparatus 102 comprises a first purification conduit 124, a second purification conduit 126 and a third purification conduit 128. Each of the first, second and third purification conduits respectively comprises an inlet at a first distal end thereof and an outlet at a second distal end thereof. The inlets and outlets of each purification conduit are respectively in fluid communication with each other.

Each of the first, second and third purification conduits 124, 126, 128 constitute a respective purification module. Each of the first, second and third purification conduits 124, 126, 128 extend longitudinally. However, one or more of the plurality of purification conduits can be shaped, for example, curved.

The first purification conduit 124 neighbours the second purification conduit 126, and the second purification module 126 neighbours the third purification conduit 128. The neighbouring purification conduits are coupled together end-to-end by, in this example, a first connector 130 and a second connector 132. The first connector 130 sealingly couples an inlet of the first purification conduit 124 to an outlet of the second purification conduit 126. The second connector 132 sealingly coupled an inlet of the second purification conduit 128 to an outlet of third purification conduit 128. An outlet of the first purification conduit 124 serves as the outlet port 114 and an inlet of the third purification conduit 128 serves as the inlet port 112. Each of the first and second connectors 130, 132 are arranged so that the plurality of purification conduits is detachable. In this respect, the first connector 130 allows the first purification conduit 124 to be detached from the second purification conduit 126, and the second connector 132 allows the second purification conduit 126 to be detached from the third purification conduit 128.

Each of the plurality of purification conduits comprises a respective purification material stored therein. In this example, each of the plurality of purification conduits stores a different purification material therein, respectively. In this example, the first purification conduit 124 stores a molecular sieve material, for example a 3A or 5A molecular sieve, the second purification conduit 126 stores a catalyst material therein, for example a nickel catalyst, and the third purification conduit 128 stores activated carbon. As can be seen from Figure 1, the second purification conduit 126 is disposed between the first and third purification conduits 124, 128. In this regard, the plurality of serially coupled purification conduits is sequentially arranged in accordance with a predetermined sequence, as in the above example of the first, second and third purification conduits 124, 126, 128.

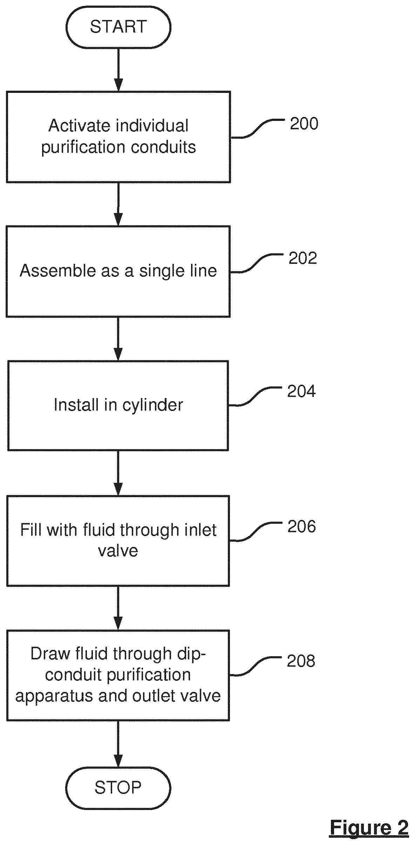

Referring to Figure 2, owing to the modular nature of the dip-conduit purification apparatus 102, depending upon conditions required to activate and condition each purification conduit, each purification conduit can be disconnected and subjected (Step 200) to independent and different temperatures and/or forming gases in order to prepare, or regenerate, each purification conduit for use. In this example, the first purification conduit 124 comprising the molecular sieve material is subjected to a first set of conditions to prepare the molecular sieve material for removal of, for example, water vapour and/or carbon dioxide. The second purification conduit 126 comprising the nickel catalyst is subjected to a second set of conditions for removal of, for example, oxygen, carbon monoxide and/or hydrogen. The third purification conduit 128 comprising the activated carbon is subjected to a third set of conditions for removal of, for example, hydrocarbons. As such, each purification conduit of the plurality of purification conduits is independently activated, for example thermally activated and/or chemically activated.

Following activation or regeneration, the first, second and third purification conduits 124, 126, 128 are then sealingly coupled together (Step 202) using the first and second connectors 130, 132 in the predetermined sequence mentioned above and coupled to the outlet valve 118 and inserted (Step 204) into the pressure vessel 100. The valve arrangement comprising the outlet valve 118 and the inlet valve 116 is sealingly connected in the neck 110 of the pressure vessel 100 and the pressure vessel 100 is then, following leak testing, ready for filling.

In this example, the pressure vessel 100 is filled (Step 206) under pressure with a supply gas, for example an inert gas, such as nitrogen grade 5.0, via the inlet valve 116. The pressure vessel 100 therefore predominantly contains the supply gas, but also contains some impurity gases.

In use, the outlet valve 118 is used to draw the supply gas from the pressure vessel 100. The supply gas resident in the interior 104 of the body portion therefore passes (Step 208) through the dip-conduit purification apparatus 102. In this respect, the insufficiently pure supply gas first passes through the third purification conduit 128 containing the activated carbon and this serves to remove, in this example some of the hydrocarbon impurities in the supply gas within the constraints and efficiency of the activated carbon material. The supply gas after purification by removal of hydrocarbons progresses to the second purification conduit 126 comprising the nickel catalyst, which removes as much oxygen, carbon monoxide and/or hydrogen impurities in the supply gas as possible within the constraints and efficiency of the nickel catalyst material in the second purification conduit 126. Following purification by removal of the oxygen, carbon monoxide and/or hydrogen impurities, the supply gas proceeds to pass through the first purification conduit 126 comprising the molecular sieve material for removal of water vapour and/or carbon dioxide impurities from the supply gas within the constraints and efficiency of the molecular sieve material. The purified supply gas then leaves the pressure vessel 100 via the outlet valve 118 at a higher purity than when in the pressure vessel 100, for example nitrogen grade 6.0.

The skilled person should appreciate that the above-described implementations are merely examples of the various implementations that are conceivable within the scope of the appended claims. Indeed, although in this example, nitrogen is described as the supply gas, other embodiments can employ hydrogen gas as the supply gas. Furthermore, nitrogen is not the only inert gas contemplated.

## Claims

1. A dip-conduit purification apparatus comprising:
a purification line comprising a plurality of serially coupled purification conduits, each of the plurality of purification conduits having an inlet at a first distal end thereof in fluid communication with an outlet at a second distal end thereof.

2. An apparatus as claimed in Claim 1, wherein a number of the plurality of purification conduits extend longitudinally.

3. An apparatus as claimed in Claim 1 or Claim 2, wherein the plurality of purification conduits each comprise a respective purification material stored therein.

4. An apparatus as claimed in Claim 3, wherein at least three of the plurality of purification conduits respectively comprise different purification materials.

5. An apparatus as claimed in Claim 3 or Claim 4, wherein a purification conduit of the plurality of purification conduits comprises a molecular sieve material.

6. An apparatus as claimed in Claim 3 or Claim 4, wherein a purification conduit of the plurality of purification conduits comprises a catalyst material.

7. An apparatus as claimed in Claim 3 or Claim 4, wherein a purification conduit of the plurality of purification conduits comprises activated carbon.

8. An apparatus as claimed in Claim 3 or Claim 4, wherein
a first purification conduit of the plurality of purification conduits comprises a molecular sieve material;
a second purification conduit of the plurality of purification conduits comprises a catalyst material;
a third purification conduit of the plurality of purification conduits comprises activated carbon; and
the second purification conduit is disposed between the first and third purification conduits.

9. An apparatus as claimed in any one of the preceding claims, wherein ends of neighbouring purification conduits of the plurality of purification conduits are coupled together by a respective connector.

10. An apparatus as claimed in any one of the preceding claims, wherein one of the plurality of purification conduits and another of the plurality of purification conduits are independently activated.

11. An apparatus as claimed in Claim 10, wherein the independently activated purification conduits are thermally activated.

12. An apparatus as claimed in any one of the preceding claims, wherein the plurality of serially coupled purification conduits is sequential arranged according to a predetermined sequence.

13. A modular dip-conduit purification apparatus comprising the dip-conduit purification apparatus as claimed in any one of the preceding claims, wherein the each of the plurality of purification conduits constitutes a purification module.

14. A pressure vessel for storing a gas therein, the pressure vessel comprising:
a body portion having an interior and an exterior, the body portion defining a neck portion at one end thereof;
a valve arrangement sealingly coupled to the neck portion;
a dip-conduit purification apparatus as claimed in any one of Claims 1 to 12; wherein
a first end of the purification line of the dip-conduit purification apparatus is operably coupled to the valve arrangement and extends within the interior of the body portion away from the valve arrangement.

15. A filled pressure vessel filled with a supply gas, the filled pressure vessel comprising the pressure vessel as claimed in Claim 14, wherein
the body portion of the pressure vessel predominantly contains the supply gas;
the body portion also contains impurity gases.

16. A method of purifying a gas comprising impurities drawn from a pressure vessel having a valve arrangement sealingly coupled thereto, the method comprising:
drawing the gas comprising impurities from within the pressure vessel through a plurality of serially coupled purification conduits, at least some of different types of the impurities being respectively removed by each of the plurality of purifications conduits as the gas passes therethrough; and
drawing the gas through the valve arrangement after drawing the gas through the plurality of serially coupled purification conduits.
